(19) Europäisches Patentamt
European Patent Office
Office européen des brevets

(11) **EP 0 941 672 B1**

(12) **EUROPÄISCHE PATENTSCHRIFT**

(45) Veröffentlichungstag und Bekanntmachung des Hinweises auf die Patenterteilung:
**05.01.2005 Patentblatt 2005/01**

(51) Int Cl.[7]: **A23L 1/29**

(21) Anmeldenummer: **99102926.5**

(22) Anmeldetag: **13.02.1999**

(54) **Nahrungsergänzungsmittel mit gekeimter Perillasaat**

Nutritional supplement with germinated perilla seed

Supplement nutritionel à base de semence de perilla germée

(84) Benannte Vertragsstaaten:
**DE DK FR IT**

(30) Priorität: **07.03.1998 DE 19809893**

(43) Veröffentlichungstag der Anmeldung:
**15.09.1999 Patentblatt 1999/37**

(73) Patentinhaber: **Jodlbauer, Heinz D. Dr.**
**30161 Hannover (DE)**

(72) Erfinder: **Jodlbauer, Heinz D. Dr.**
**30161 Hannover (DE)**

(74) Vertreter: **Patentanwälte**
**Hauck, Graalfs, Wehnert, Döring, Siemons, Schildberg**
**Neuer Wall 41**
**20354 Hamburg (DE)**

(56) Entgegenhaltungen:
**EP-A- 0 242 976       DE-A- 4 314 899**
**DE-A- 4 327 310**

- **DATABASE EPODOC European Patent Office "Capsule composition for control of adult people containing perilla japonica oil" XP002105200 & KR 9 711 073 B (LG CHEMICAL CO LTD (KR)) 7. Juli 1997**

**Beschreibung**

Die Erfindung bezieht sich auf ein Nahrungsmittel, dem zur Vorbeugung gegen degenerative Gefäßerkrankungen bzw. Stärkung und Stabilisierung des Herzkreislaufsystems ein Ergänzungsmittel in Form essentieller Fettsäuren zugesetzt ist.

Der modernen Ernährungslehre folgend werden zunehmend Nahrungsergänzungsmittel mit dem Schwerpunkt Vitamine, essentielle Fettsäuren und Aminosäuren in der Nahrungsmittelindustrie eingesetzt. Durch die Nahrungsergänzungsmittel oder sogenannte Nutritional Supplements wird angestrebt, die Nahrung für bestimmte Risikogruppen zu optimieren.

Insbesondere das Problem der Fettstoffwechselstörung gehört zum wichtigsten Risikofaktor für degenerative Gefäßerkrankungen, insbesondere für die koronare Herzkrankheit. Fettstoffwechselstörungen können den Cholesterinspiegel im Blut erhöhen und damit die Gefahr einer Herzkreislauferkrankung heraufbeschwören.

Im Rahmen von speziellen Diätempfehlungen zu diesem Komplex kristallisierte sich in der Vergangenheit mehr und mehr die Anwendung von Omega-3-Fettsäuren heraus. Sie werden aus Fischen gewonnen, nämlich die DHA-(Docosahexaenoicacid) und EPA (Eicosapentasenoicacid), die beispielsweise in Form von Lachsölkapseln zur Verfügung stehen. Eine solche Kapsel enthält z.B. 500 mg Lachsöl mit 117,5 mg Omega-3-Fettsäuren. Für die Verwendung als Nahrungsergänzungsmittel ist auch bekannt, Fischöle in Form von Mikroverkapselungen einzusetzen, um den unangenehmen Fischgeruch so weit es geht zu minimieren. Derartige mikroverkapselte Fischöle werden zum Beispiel in speziellen Kindernahrungsmitteln eingesetzt. Es hat sich jedoch sehr schnell gezeigt, daß die zur Zeit eingesetzten Massen (Trägerstoffe) zur Mikroverkapselung, wenn sie zum Beispiel der Hitze ausgesetzt werden, keine ausreichende Schutzwirkung im Endprodukt mehr aufweisen, d.h. durch die Hitzeeinwirkung werden fischartige Gerüche im Endprodukt freigesetzt. Speziell für Backwaren, aber auch für Schokolade oder dergleichen ist die Geruchsbelastung so stark, daß solcherart angereicherte Produkte vom Konsumenten abgelehnt werden. Je höher der Gehalt an Fischöl im Backprodukt ist, desto unangenehmer und fremdartiger wirkt sich dies im Backprodukt aus.

Aus diesem Grunde wird die Zugabemenge bei heutigen Backwaren auf höchstens 25% der Tagesbedarfsdosis bei einer durchschnittlichen Brotverzehrmenge von 200 g/Tag begrenzt. Auch der Ersatz von Fischöl durch einen anderen Omega-3-Fettsäuren-Lieferanten, wie beispielsweise Leinöl, bringt geschmacklich nur eine unwesentliche Verbesserung. Auch Leinöl ist trotz ausreichender Raffination mit einem unangenehmen arttypischen Geruch behaftet, der auch durch Mikroverkapselung nicht verhindert werden kann.

Der Erfindung liegt daher die Aufgabe zugrunde, ein Nahrungsmittel mit einem Ergänzungsmittel anzugeben, das zur Vorbeugung gegen degenerative Gefäßerkrankungen bzw. Stärkung und Stabilisierung des Herzkreislaufsystems essentielle Fettsäuren enthält, das jedoch Hitzeeinwirkungen gut übersteht und frei von fremdartigen Gerüchen ist.

Diese Aufgabe wird durch die Merkmale des Patentanspruchs 1 gelöst.

Bei der Erfindung wird Perillaöl in Pulverform als Nahrungsergänzungsmittel vorgesehen. Perillaöl ist völlig neutral schmeckend. Der Samen der Perillapflanze enthält bis zu 60% Alpha-Linolensäure als Omega-3-Fettsäure.

Perillaöl aus dem Samen der Perillapflanze ist im asiatischen Raum als Koch- oder Salatöl an sich bekannt.

Die Anwendung des Perillaöls als erfindungsgemäßes Nahrungsergänzungsmittel ist auf verschiedene Weise möglich. Es kann mikroverkapselt oder auch unverkapselt verwendet werden. Es kann Perillasamen ungeschält oder geschält verwendet werden. Die Verwendung von gekeimtem, getrocknetem und gemahlenem Perillasamen bietet den Vorteil, daß er eine hohe Anreicherung mit natürlichen Enzymsystemen aufweist.

Die Verwendung des pulverförmigen Perillaöls kann für alle herkömmlichen Nahrungsmittel vorgesehen sein, insbesondere für Brot, Brötchen oder Gebäck, für Mehl, für Süßwaren, z.B. Schokolade oder Weichkaramellen usw.

Wie schon erwähnt, ist besonders vorteilhaft die Verwendung von gekeimten Perillasamen, die nach der Vermahlung vorzugsweise mit Fett beschichtet sind. Ein erfindungsgemäßes Verfahren sieht hierzu vor, daß das gemahlene Keimgut mit geschmolzenem Fett gemischt und anschließend versprödet wird, bevor eine erneute pulverförmige Vermahlung erfolgt, beispielsweise in einer Korngröße von 500 μm oder kleiner bei mindestens 90% der Menge. Die Keimdauer beträgt zwischen 3 und 6 Tagen, vorzugsweise 4 Tage. Die Versprödung erfolgt vorzugsweise mit Trockenkohlensäure oder flüssigem Stickstoff, was an sich bei der Verarbeitung anderer Produkte in der Nahrungsmittelindustrie bekannt ist.

Überraschenderweise hat sich gezeigt, daß erfindungsgemäßes Perillaöl anderen Omega-3-Fettsäure-Lieferanten, wie den üblichen Fischölen, weit überlegen ist. Zum einen ist es völlig geruchsneutral und zum anderen läßt es sich ohne Schwierigkeiten mikroverkapseln, wobei die verschiedensten Trägermaterialien eingesetzt werden können. Probleme der Hitzeeinwirkung und Freisetzung unangenehmer Gerüche wie bei Fischölen spielen keine Rolle. Das Endprodukt ist zum Beispiel in der Backware vollständig geschmacksneutral. Es ist zum Beispiel im Brot- und im Brötchen-Produktionsbereich auf diätetischer Basis als Nahrungsergänzungsmittel zur Versorgung mit Omega-3-Fettsäuren hervorragend geeignet. Ein Rückgriff auf Kapseln oder Tabletten entfällt. Wie schon erwähnt, ist gekeimtes gemahlenes Produkt von Perillasaaten bevorzugt, weil dadurch eine hohe Anreicherung an Enzymen stattfindet auf der Basis von Lipasen und Lipoxigenasen.

Anschließend folgen einige Beispiele für Nahrungsmittel mit dem erfindungsgemäßen Nahrungsergänzungsmittel.

Beispiel 1 (nicht erfindungsgemäß)

| Schnittbrötchenrezeptur | kg |
|---|---|
| Weizenmehl Type 550, kleberstark | 47,000 |
| Weizenmehl Type 550, normal | 23,000 |
| Hefe | 2,000 |
| Backlecithin 26 MTK | 2,750 |
| Salz | 1,400 |
| Wasser | 36,000 |
| Perillaöl | 1,900 |
| | 114,050 |

Teigbereitung, Formung, Gärung und Backen erfolgt nach den üblichen Verfahren gemäß Stand der Technik.

1 Brötchen (60 g Teigeinlage) enthält 1 g Perillaöl mit ca. 600 mg alpha-Linolensäure (Omega-3-Fettsäure) vegetabilen Ursprungs.

Mit 2 Brötchen kann somit die therapeutische Tagesdosis an Omega-3-Fettsäuren erreicht werden; damit wird die Möglichkeit geschaffen, im Rahmen der normalen Ernährung bei einer Fettstoffwechselstörung die therapeutische Wirkung von Omega-3-Fettsäuren voll zur Geltung zu bringen.

Beispiel 2 (nicht erfindungsgemäß)

| Roggenvollkornschrotbrötchen | kg |
|---|---|
| Quellstück | |
| Bio-Roggenschrot grob | 3,000 |
| Wasser | 2,000 |
| Sauerteig | 1,000 |
| Teig | |
| Bio-Roggenvollkornmehl | 2,000 |
| Bio-Weizenvollkornmehl | 3,500 |
| Bio-Weizenmehl Type 550 | 1,000 |
| Trockenhefe | 0,400 |
| Wasser | 4,000 |
| Salz | 0,210 |
| Backlecithin 26 MTK | 0,400 |
| mikroverkapseltes Perillaöl in Pulverform | 0,700 |
| | 18,210 |

Zusammensetzung des mikroverkapselten Perillaöl: 50% Perillaöl/50% vegetabiles Fett (Pp 52°C).

1 Vollkornbrötchen (100 g Teigeinlage) enthält 1,96 g Perillaöl mit 1175 mg Omega-3-Fettsäure.

Beispiel 3

Schnittbrötchen mit gemahlenen, gekeimten Perilla nach folgendem Verfahren:

Stufe 1

Die Perillasaat wird nach einem bekannten Verfahren zwischen 3 und 6 Tagen, vorzugsweise 4 Tage keimen gelassen; die sich anschließende schonungsvolle Trocknung erfolgt nach bekanntem Verfahren, vorzugsweise durch Gefriertrocknung.

Stufe 2

Die gekeimte, getrocknete Perillasaat wird mit einem geschmolzenen Fett, vorzugsweise Palmfett, im Verhältnis 90:10 gemischt und mittels eines Kältemittels, vorzugsweise Trockenkohlensäure oder flüssigem Stickstoff versprödet. Der sich sofort anschließende Vermahlungsprozeß, vorzugsweise mittels Hammermühle, erzielt ein pulverförmiges Produkt, Körnungsgröße ca. 90% unter 500 Mikrometer, das beispielsweise in folgender Schnittbrötchenrezeptur zur Erzielung einer therapeutischen Dosis an Omega-3-Fettsäure verwendet wird:

|  | kg |
|---|---|
| Weizenmehl Type 550, kleberstark | 47,000 |
| Weizenmehl Type 550, normal | 20,500 |
| Hefe | 2,000 |
| Backlecithin 26 MTK | 2,750 |
| Salz | 1,400 |
| Perillagemisch | 4,400 |
| Wasser | 36,000 |
|  | 114,050 |

Teigbereitung, Formung, Gärung und Backen des Teiges erfolgt nach den üblichen Verfahren gemäß Stand der Technik.

1 Brötchen (60 g Teigeinlage) enthält 1 g Perillaöl mit ca. 600 mg Omega-3-Fettsäuren, mit 2 Brötchen erreicht man die therapeutische Tagesdosis an Omega-3-Fettsäuren.

Beispiel 4 (nicht erfindungsgemäß)

Milchkaramellen

|  | kg |
|---|---|
| Zucker | 22,000 |
| Glukosesirup | 20,000 |
| Blockmilch (18%ige Spezialkondensmilch) | 8,000 |
| Butter | 0,250 |
| Hartfett | 0,320 |
| Lecithinfraktion (40%ig an PC) | 0,100 |
| Salz | 0.200 |
| Vanillin | 0,015 |
| Sahnearoma | 0,030 |
| Perillaöl | 2,670 |
|  | 53,585 |

Kochgrad: 127°C

Die Herstellung der Milchkaramellen erfolgt nach folgendem Verfahren:

Verwendet wird beispielsweise ein Vakuumkochapparat bekannter Technik zum Herstellen von Weichkaramellen nach bekanntem Verfahren; der Vakuumapparat wird aus folgenden Gründen verwendet:

1. Das Kochen unter schonenden Bedingungen.

2. Das Kochen muß unter schonendsten Bedingungen erfolgen, um die Oxidation der Omega-3-Fettsäuren zu verhindern; dies erfolgt durch laufende Begasung mit Stickstoff, um Sauerstoffausschluß zu gewährleisten.

In einer Milchkaramelle (5 g) sind 0,25 g Perillaöl mit ca. 150 mg Omega-3-Fettsäuren.

Mit 5-6 Milchkaramellen wird bereits eine therapeutische Wirkdosis erreicht.

Beispiel 5

Schokoladeplättchen aus Milchschokolade (nicht erfindungsgemäß)

Die Schokoladeware wird nach bekanntem Verfahren hergestellt; darauf aufbauend wurde folgende Rezeptur entwickelt:

|  | kg |
|---|---|
| geconchte, geschmolzene und vortemperierte Milchschokolade | 9,75 |
| mikroverkapseltes Perillaöl in Pulverform | 0,25 |
|  | 10,00 |

1 Schokoladeplättchen (10 g) enthält 0,25 g Perillaöl, d.h. ca. 150 mg Omega-3-Fettsäuren; ab 8 Schokoladeplättchen wird eine therapeutische Tagesdosis erreicht.

Beispiel 6 nicht erfindungsgemäß

Schokoladeplättchen mit Perillasamen als sog. "Crisp-Schokolade"

|  | kg |
|---|---|
| geconchte, geschmolzene und vortemperierte Milchschokolade | 98,96 |
| Perillasamen | 1,04 |
|  | 100,00 |

1 Schokoladeplättchen (10 g) enthält ca. 0,5 g Perillaöl, das entspricht ca. 300 mg Omega-3-Fettsäuren.

Beispiel 7

Weizenmehl der Type 405 mit Omega-3-Fettsäuren

Die Herstellung des Weizenmehles erfolgt nach bekannten Verfahren. Als Omega-3-Fettsäurequelle wird das nach Beispiel 3 hergestellte Perillaprodukt eingesetzt.

|  | kg |
|---|---|
| Weizenmehl der Type 405 | 999,61 |
| Perillaprodukt, Herstellung gemäß Beispiel 3 | 0,39 |
|  | 1000,00 |

In 1000 g Weizenmehl der Type 405 (Haushaltsmehl) sind ca. 100 mg Omega-3-Fettsäuren enthalten.

**Patentansprüche**

1. Nahrungsmittel, dem zur Vorbeugung gegen degenerative Gefäßerkrankungen bzw. Stärkung und Stabilisierung des Herzkreislaufsystems ein Ergänzungsmittel in Form essentieller Fettsäuren zugesetzt ist, **dadurch gekennzeichnet, daß** als Ergänzungsmittel gekeimte, getrocknete und gemahlene Perillasamen vorgesehen sind.

2. Nahrungsmittel nach Anspruch 1, **dadurch gekennzeichnet, daß** eine Tagesverzehrmenge des Nahrungsmittels etwa 1 bis 2 g Perillaöl enthält.

3. Nahrungsmittel nach Anspruch 1 oder 2, **dadurch gekennzeichnet, daß** Perillasamen ungeschält oder geschält verwendet sind.

4. Nahrungsmittel nach einem der Ansprüche 1 bis 3, **dadurch gekennzeichnet, daß** das Mahlgut mit einer Fettbeschichtung versehen ist.

5. Nahrungsmittel nach einem der Ansprüche 1 bis 4, **dadurch gekennzeichnet, daß** 90% des Mahlguts eine Körnungsgröße von 500 μm oder kleiner aufweist.

6. Nahrungsmittel nach einem der Ansprüche 1 bis 5, **dadurch gekennzeichnet, daß** es Brot, Brötchen oder ein Gebäck ist.

7. Nahrungsmittel nach einem der Ansprüche 1 bis 5, **dadurch gekennzeichnet, daß** es Mehl ist.

8. Nahrungsmittel nach einem der Ansprüche 1 bis 5, **dadurch gekennzeichnet, daß** es eine Süßware ist, insbesondere Schokolade oder Weichkaramellen.

9. Verfahren zur Herstellung des Nahrungsmittels nach einem der Ansprüche 1 bis 8, **gekennzeichnet durch** folgende Schritte:

   - Perillasaat wird während einer Dauer von 3 bis 6 Tagen keimen gelassen,
   - das Keimgut wird anschließend getrocknet,
   - das getrocknete Gut wird gemahlen und mit geschmolzenem Fett gemischt und versprödet,
   - das gemischte Gut wird pulverförmig vermahlen.

10. Verfahren nach Anspruch 9, **dadurch gekennzeichnet, daß** die Keimungsdauer 4 Tage beträgt.

11. Verfahren nach Anspruch 9 oder 10, **dadurch gekennzeichnet, daß** das Mischungsverhältnis von gemahlenem Perillasamen zu Fett annähernd 90:10 beträgt.

12. Verfahren nach einem der Ansprüche 9 bis 11, **dadurch gekennzeichnet, daß** das Keimgut durch Gefriertrocknung getrocknet wird.

13. Verfahren nach einem der Ansprüche 9 bis 12, **dadurch gekennzeichnet, daß** mit Trockenkohlensäure oder flüssigem Stickstoff versprödet wird.


**Claims**

1. A foodstuff to which a nutritional supplement has been added in the form of essential fatty acids to help prevent degenerative vascular diseases and to vitalize and stabilize the cardiovascular system, **characterized in that** perilla seeds which are germinated, dried, and ground are provided as a nutritional supplement.

2. The foodstuff according to claim 1, **characterized in that** a daily consumption quantity of the foodstuff contains about 1 to 2 g of perilla oil.

3. The foodstuff according to claim 1 or 2, **characterized in that** the perilla seeds used are non-peeled or peeled.

4. The foodstuff according to any one of claims 1 to 3, **characterized in that** the seeds to be ground are provided with a coat of fat.

5. The foodstuff according to any one of claims 1 to 4, **characterized in that** 90 % of the seeds to be ground has a grain size of 500 µm or less.

6. The foodstuff according to any one of claims 1 to 5, **characterized in that** it is a bread, bread roll or pastry.

7. The foodstuff according to any one of claims 1 to 5, **characterized in that** it is a flour.

8. The foodstuff according to any one of claims 1 to 5, **characterized in that** it is a sweet product, particularly chocolate or soft caramels.

9. A method for the production of the foodstuff according to any one of claims 1 to 8, **characterized by** the steps of:

   - allowing perilla seeds to germinate for a period of from 3 to 6 days,
   - drying the germinated seeds subsequently,
   - grinding the dried seeds, mixing them with molten fat and embrittling them,
   - milling the mixed product into powder.

10. The method according to claim 9, **characterized in that** the germination period is 4 days.

11. The method according to claim 9 or 10, **characterized in that** the ground perilla seed to fat mixing ratio is approximately 90 : 10.

12. The foodstuff according to any one of claims 9 to 11, **characterized in that** the germinated seeds are dried by freeze-drying.

13. The foodstuff according to any one of claims 9 to 12, **characterized in that** embrittling is performed by means of dry carbonic acid or liquid nitrogen.

**Revendications**

1. Produit alimentaire, auquel est ajouté un agent de complément alimentaire sous forme d'acides gras essentiels destiné à prévenir les maladies cardiovasculaires ou à renforcer et à stabiliser le système circulatoire, **caractérisé en ce qu'**en tant qu'agent de complément, on utilise des graines de pérille germées, séchées et moulues.

2. Produit alimentaire selon la revendication 1, **caractérisé en ce qu'**une quantité de consommation quotidienne du produit alimentaire contient environ 1 à 2 g d'huile de pérille.

3. Produit alimentaire selon la revendication 1 ou 2, **caractérisé en ce qu'**on utilise les graines de pérille sous forme brute ou écossée.

4. Produit alimentaire selon une des revendications 1 à 3, **caractérisé en ce que** la matière moulue est pourvue d'une couche grasse.

5. Produit alimentaire selon une des revendications 1 à 4, **caractérisé en ce que** 90 % de la matière moulue a une granulométrie de 500 µm ou inférieure.

6. Produit alimentaire selon une des revendications 1 à 5, **caractérisé en ce que** c'est un pain, un petit pain ou un gâteau.

7. Produit alimentaire selon une des revendications 1 à 5, **caractérisé en ce que** c'est de la farine.

8. Produit alimentaire selon une des revendications 1 à 5, **caractérisé en ce que** c'est une sucrerie, notamment du chocolat ou du caramel mou.

9. Procédé de préparation du produit alimentaire selon une des revendications 1 à 8, **caractérisé par** les étapes suivantes :

- les semences de pérille sont mises à germer pendant une durée de 3 à 6 jours,
- la matière germée est ensuite séchée,
- la matière séchée est moulue et mélangée à de la graisse fondue, puis fragilisée,
- la matière mélangée est moulue en poudre.

10. Procédé de préparation selon la revendication 9, **caractérisé en ce que** la durée de germination est de 4 jours.

11. Procédé selon la revendication 9 ou 10, **caractérisé en ce que** le rapport de mélange des graines de pérille broyées à la graisse est approximativement de 90 : 10.

12. Procédé selon une des revendications 9 à 11, **caractérisé en ce que** la matière germée est séchée par cryodessication.

13. Procédé selon une des revendications 9 à 12, **caractérisé en ce qu'**on fragilise la matière avec du gaz carbonique sec ou de l'azote liquide.